# EUROPEAN PATENT APPLICATION

(11) **EP 1 876 520 A2**
(43) Date of publication of application: **09.01.2008**
(21) Application number: 07103668.5
(22) Date of filing: 07.03.2007
(51) Int. Cl.: G06F 3/12

(54) **Method and system for forming an image using data**

(30) Priority: 04.07.2006 KR 20060062438
(71) Applicant: Samsung Electronics Co., Ltd., Suwon-si, Gyeonggi-do (KR)
(72) Inventor: Ha, Jun-hyung 106-1902 Raemian Apt.,, Seoul (KR)
(74) Representative: Clark, Charles Robert

(57) **Abstract**

A method and system of forming an image using XML data including generating and binding XML print data, corresponding to print data, and XML job set data, corresponding to job set information of the print data, transmitting the bound XML data to an image forming device, and performing a print job using the transmitted bound XML data. Accordingly, a printing job and a print job set job can be performed simultaneously using only one standardized XML protocol without defining a novel protocol.

## Description

The present invention relates to the formation of an image using data, in particular XML data. Aspects of the present invention relate to printing performed by an image forming device that is connected to a host device (such as a personal computer, a mobile device, or the like) through a network, and more particularly, to a method and system to form an image using XML data in which a printing job and a print job setting can be performed simultaneously using a standardized XML protocol.

Conventionally, in order to print data using the Internet, computers directly access a web server and transmit print data to a printer. The transmitted print data is generated by an application program and a printer driver. However, since mobile devices (such as PDAs and Internet phones) are now widely used, there is a need to print the print data though mobile devices. Accordingly, in order to print data using the Internet, a mobile device receives data from a web server through a wireless Internet connection and then transmits print data (which is generated by an application program and a printer driver embodied in the mobile device) to a printer. The print data transmitted to the printer can be classified through a process of data analyses into data to be printed and other data. Then, the data to be printed is printed. In addition, when printer settings are input through the printer driver, the printer settings are transmitted to the printer to set how the printing is performed.

Meanwhile, a printer driver in a PC generates a printer job language (PJL) and controls a printing job. However, this technique cannot be applied to a mobile environment. In current mobile environments (such as Bluetooth Basic Printing Profile (BPP), PrintBasic of Universal Plug and Play (UPnP), or the like), a printing job is controlled using a Simple Object Access Protocol (SOAP) message.

However, this technique is not standardized, and thus cannot be used as a general-purpose technique in a mobile environment.

Aspects of the present invention aim to provide a method and system to form an image using XML data in which a printing job and a print job setting can be performed simultaneously using only one standardized XML protocol without defining a novel protocol.

The present invention is not limited to XML, and other computer lanuages can be used. For instance, other standard computer-based languages which have a primary purpose to facilitate the sharing of data across different information systems, particularly systems connected via the Internet, might be used in the present invention.

According to an aspect of the present invention, there is provided a method of forming an image using XML data including: generating XML print data corresponding to print data and generating XML job setting data corresponding to job setting information of the print data, binding the generated XML print data and the generated XML job setting data, transmitting the bound XML data to an image forming device, and performing a job using the transmitted bound XML data.

According to another aspect of the present invention, there is provided a system of forming an image using XML data including: a host device to generate XML print data, corresponding to print data, and XML job setting data, corresponding to job setting information of the print data, to bind the XML print data and the XML job setting data, and to output the bound XML data; and an image forming device to receive the bound XML data from the host device, and to perform a job using the bound XML data.

Embodiments of the present invention are now described, by way of example and with reference to the accompanying drawings of which:
Figure. 1 is a flowchart illustrating an image forming method using XML data according to an embodiment of the present invention;
Figure. 2 is a flowchart illustrating a binding of XML print data and XML job setting data according to an embodiment of the present invention;
Figure. 3 illustrates XML print data generated according to an embodiment of the present invention;
Figure. 4 illustrates XML job setting data generated according to an embodiment of the present invention;
Figure. 5 is a flowchart illustrating an analyzing of bound XML data according to an embodiment of the present invention; and
Figure. 6 is a block diagram illustrating an image forming system using XML data according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the Figures.

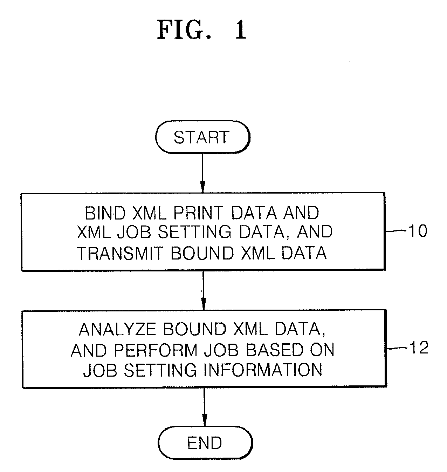

Hereinafter, an image forming method using XML data according to aspects of the present invention will be described with reference to the accompanying drawings. Figure. 1 is a flowchart illustrating an image forming method using XML data according to an embodiment of the present invention. The image forming method includes binding XML print data and XML job setting data, which include data in extensible markup language (XML) format, transmitting the bound XML data to an image forming device (operation 10). In operation 12, the method includes interpreting and printing the bound XML data and/or performing a set up operation in the image forming device (operations 10 and 12).

Specifically, in operation 10, the XML print data, corresponding to print data, and the XML job setting data, corresponding to job setting information of the print data, are each generated. Then, the generated XML print data and XML job setting data are bound and transmitted to the image forming device. Byway of example, users access a web server (not shown) using a mobile device, such as a cellular phone, PDA, or the like, and receive desired print data. Print data can include data in various kinds of formats, and thus the print data is converted to XML print data in XML format, which is a general-purpose communication language for the Internet. Data in XML format is generally used for homepage construction, performing searches, and data handling of a client system to enable easy handling. Internet users can readily write and handle items to be added to a web server using data in the XML format. However, it is understood that other standard formats can be used and/or be created in addition to or instead of XML, such as XHMTL, or the like.

Meanwhile, setting information for a print data job is converted to XML job setting data, i.e., job setting data in the XML format.

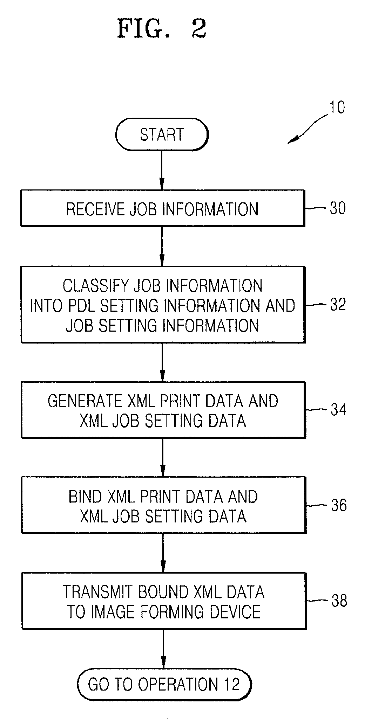

Figure. 2 is a flowchart illustrating a binding of XML print data and XML job setting data, such as in operation 10, according to an embodiment of the present invention. Job information of the print data is input through a user interface (operation 30). However, it is understood that job information of the print data may be input through other devices and/or stored internally or externally and received through a wireless or wired connection. Here, the job information of the print data is all the information used to set how the print data is printed, the number of prints to be made, print paper size, whether to save the print data, whether user authentication is required, and/or the like. After operation 30, the input job information is interpreted, and is classified into page description language (PDL) setting information of the print data and job setting information (operation 32). PDL is a computer language used to describe the manner in which text and graphics are distributed on a page to be printed. Here, the PDL setting information concerns the distribution of text and graphics within a page to be printed, print paper size, print margin size, and/or the like. However, it is understood that other computer languages can be used to describe the setting information instead of or in addition to PDL.

Meanwhile, the job setting information is setting information to print the print data, and includes at least one of information indicating whether to print the print data, information indicating the number of prints to be made, information indicating whether to save the print data, information indicating whether user authentication is required, and/or other data. That is, the job setting information includes at least one of information concerning whether to print the XML print data, whether to save the XML print data to the image forming device, and whether user authentication is required. According to an aspect of the invention, saving the XML print data may be requested, or both saving and printing may be requested simultaneously. Here, information concerning whether to save the print data may include information on a save format of the XML print data. The information further includes information indicating whether to save the XML print data itself, and/or whether to extract and save JPEG data, BMP data, or other file types from the XML print data.

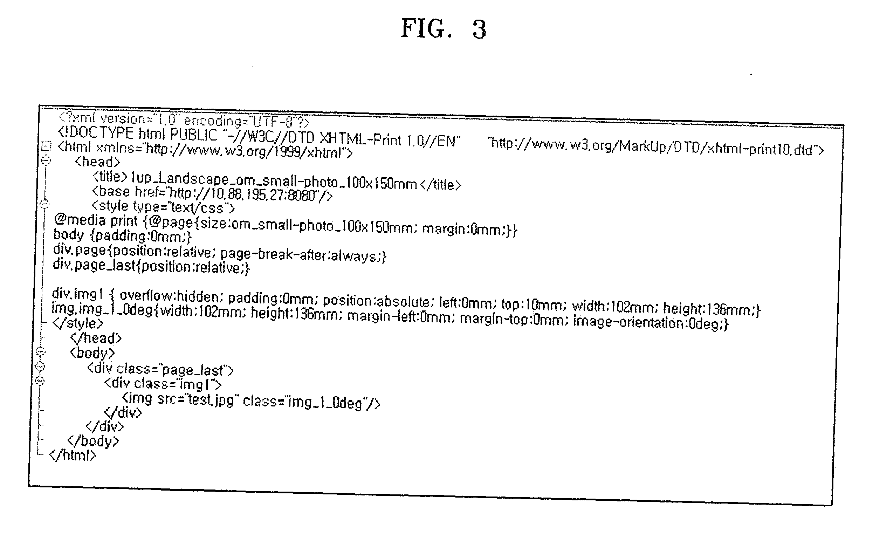

After operation 32, the XML print data corresponding to the print data is generated using the PDL setting information, and the XML job setting data is generated using the job setting information (operation 34). The PDL setting information includes page information of the print data, such as the distribution of text or graphics within a page of the print data, paper size, margin size, and/or the like. The XML print data for the PDL setting information is generated using the XML format. Figure. 3 illustrates XML print data generated in operation 34 of Figure. 2, according to an embodiment of the present invention. Referring to Figure. 3, data concerning the distribution of text or graphics within a page of the print data, paper size, margin size, and/or the like are displayed using the XML format.

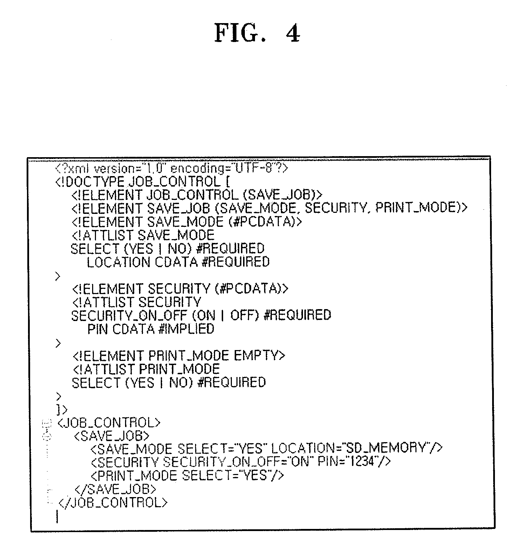

Meanwhile, the XML, job setting data of the job setting information corresponding to setting information for printing is generated using the XML format. Figure. 4 illustrates XML job setting data generated in operation 34 of Figure. 2, according to an embodiment of the present invention. Referring to Figure. 4, data concerning whether to save the print data corresponding to the job setting information, a location of the saved data, whether user authentication and/or any password is required, and/or the like are displayed using the XML format.

After operation 34, the generated XML print data and the XML job setting data are bound (operation 36). For example, the XML, print data of Figure. 3 and the XML job setting data of Figure. 4 are bound. The binding of the XML data can be performed by conventional binding techniques usable with XML.

After operation 36, the bound XML data is transmitted to the image forming device (operation 38). Here, the bound XML data is transmitted to the image forming device through a wired and/or wireless network. When a mobile device and the image forming device are connected through a wired network or a wireless network (such as Bluetooth), the bound XML data is transmitted to the image forming device through these networks.

Meanwhile, referring to Figure. 1, after operation 10, the bound XML data is classified into the XML print data and the XML job setting data. The XML print data is printed based on the job setting information of the XML job setting data (operation 12).

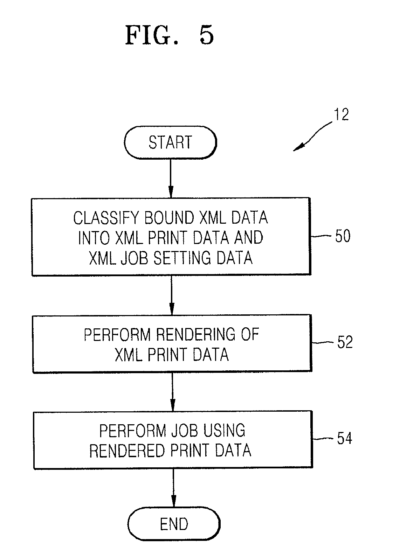

Figure. 5 is a flowchart illustrating an analyzing of bound XML data, such as operation 12, according to an embodiment of the present invention. The XML data bound in operation 10 of Figure. 1 includes the XML, print data and the XML job setting data. The bound XML data is interpreted and classified into the XML print data and the XML job setting data (operation 50). In more detail, the bound XML data is interpreted using an interpreter. The bound XML data is classified into the XML print data and the XML job setting data based on the interpretation result.

After operation 50, rendering of the classified XML print data is performed (operation 52). The XML print data includes page information of the print data based on the PDL setting information. Accordingly, the rendering of the print data is performed by reference to the page information of the print data, which concerns the distribution of text or graphics, paper size, margin size, and/or the like.

After operation 52, a print job for the print data, which has been rendered, is performed based on the XML job setting data (operation 54), which was classified in operation 50. The XML job setting data may include information concerning whether to print the XML print data, whether to save the XML print data to the image forming device, and/or whether to require user authentication. Accordingly, when the XML job setting data includes a command to print the XML print data, the print data on which rendering has been performed is printed. When, the XML job setting data includes a command to save the XML print data, the XML print data is saved in a predetermined memory of the image forming device. However, it is understood that the XML print data may be saved in a memory of an external device, such as a network server, through a wired or wireless connection. When saving of the XML print data is requested, the XML print data itself may be saved, and/or the XML print data to be printed (for example, JPEG data, BMP data, or the like) may be saved separately. The saved XML print data, JPEG data, BMP data, or the like may be printed later, may be displayed on the image forming device, or may be printed simultaneously. When the XML job setting data includes a command to perform user authentication, a user authentication process to print may be performed on the image forming device.

Meanwhile, when the XML job setting data includes commands to perform a saving and a printing of the XML print data, the XML print data is saved in a predetermined memory of the image forming device, and the print data on which rendering has been performed is printed simultaneously. However, it is understood that, according to an aspect, the printing may be performed before the saving, or the saving may be performed before the printing. When the XML job setting data includes commands to perform a user authentication and a saving of the XML print data, a user authentication process is first performed. Then, the XML print data is saved in a predetermined memory of the image forming device. However, it is understood that, according to an aspect, the saving may be performed before the user authentication process. When the XML job setting data includes commands to perform a user authentication, a saving and a printing of the XML print data, a user authentication process is first performed. Then, the XML print data is saved in a predetermined memory of the image forming device and the print data that has been rendered is printed simultaneously. However, it is understood that, according to an aspect, the saving, the printing, and the authentication may be performed in a different order.

Embodiments of the present invention can be realized as computer implemented code/instructions/program(s) which can be read in one or more general-purpose digital computers in which the code/instructions/program can be operated or any apparatus that can read and/or process the code/instructions/program(s), using a medium, for example, a recording medium readable by a computer. The recording medium readable by the computer includes a recordable medium such as a magnetic recording medium (for example, a ROM, a floppy disk, a hard disk, a magnetic tape, or the like), an optical reading medium (for example, CD ROM, DVD, or the like), and a computer data signal embodied in a carrier wave comprising a compression source code segment and an encryption source code segment. In addition, embodiments of the present invention can be realized in a medium within which a code readable by a computer is recorded. Furthermore, a plurality of computers and/or apparatuses that can read and/or process the code/instructions/program(s) connected to each other through networks can distribute and perform the jobs included in the aspects of the present invention. Those of ordinary skill in the art can readily understand programs, codes, and code segments in which the present invention can be realized.

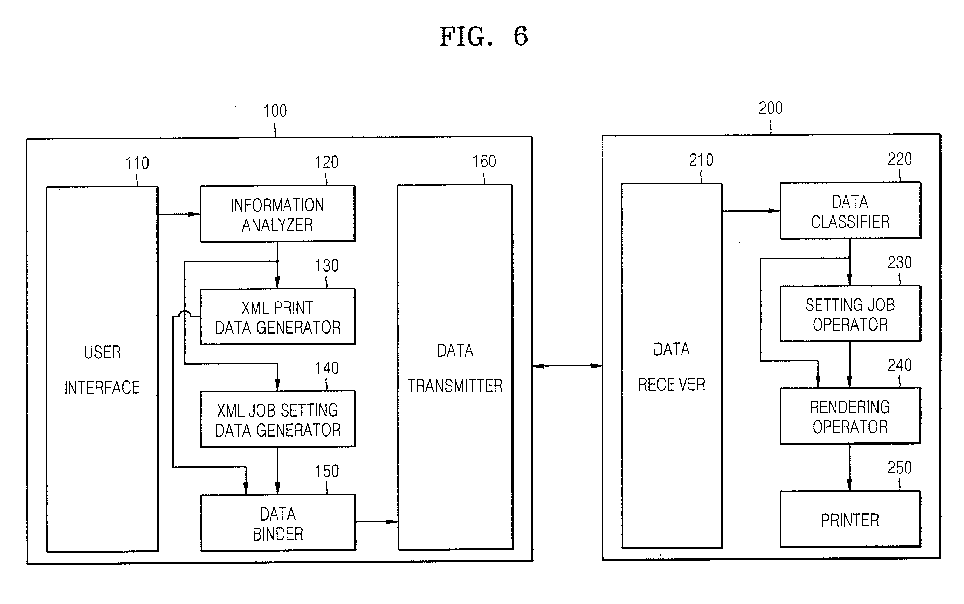

Hereinafter, an image forming system using an XML data according to aspects of the present invention will be described more fully with reference to the accompanying drawings. FIGURE. 6 is a block diagram illustrating an image forming system using XML data according to an embodiment of the present invention. The image forming system includes a host 100 and an image forming device 200.

The host 100 may be a mobile device, such as a cellular phone, a PDA, a camera, a portable computer, a media player, or the like. However, it is understood that the host 100 could be non-mobile in other aspects, such as a computer.

The host 100 generates XML print data, corresponding to print data, and XML job setting data, corresponding to job setting information of the print data. Furthermore, the host binds the generated XML print data and XML job setting data and outputs the bound data to the image forming device 200. To achieve this, the shown embodiment of the host 100 includes a user interface 110, an information analyzer 120, an XML print data generator 130, an XML job setting data generator 140, a data binder 150, and a data transmitter 160. However, it is understood that the host 100 can be otherwise constructed, such as by having a display.

The user interface 110 receives job information concerning the print data, and outputs the received job information to the information analyzer 120. The job information of the print data includes information on configuring how the print data is printed, such as the number of prints to be made, the print paper size, whether to save the print data, whether user authentication is required, and/or the like. The user interface 110 can be a keyboard or a touch screen display, a click wheel, or a receiver that receives input from an external device.

The information analyzer 120 analyzes the received job information, and classifies the print data into PDL setting information and job setting information. The information analyzer 120 outputs the PDL setting information to the XML print data generator 130, and outputs the job setting information to the XML job setting data generator 140. By way of example, the PDL setting information includes information such as a distribution of a text or graphic within a page of the print data, a paper size, a margin size, and/or the like.

The job setting information is setting information for printing the print data, and includes at least one or more of information indicating whether to print the print data, information on the number of prints to be made, information indicating whether to save the print data, information indicating whether user authentication is required, and the like. Information on whether to save the XML print data of the job setting information may include information on a save format; that is, information concerning whether to save the XML print data itself, or whether to extract and save JPEG data, BMP data, or the like from the XML print data.

The XML print data generator 130 generates the XML print data corresponding to the print data using the PDL setting information, and outputs the generated XML print data to the data binder 150. Referring to Figure. 3, the XML print data generator 130 displays the distribution of a text or graphic within a page of the print data, paper size, margin size, and/or the like using the XML format.

The XML job setting data generator 140 generates the XML job setting data using the job setting information, and outputs the generated XML job setting data to the data binder 150. Referring to Figure. 4, the XML job setting data generator 140 displays information concerning whether to print the print data corresponding to the job setting information, whether to save the print data corresponding to the job setting information, whether user authentication is required, and/or the like using the XML format.

The data binder 150 binds the generated XML print data and XML job setting data, and outputs the bound XML data to the data transmitter 160. For example, the data binder 150 binds the XML print data of Figure. 3 and the XML job setting data of Figure. 4.

The data transmitter 160 transmits the bound XML data to the image forming device 200 through a wired and/or wireless network. When a mobile device and the image forming device are connected to each other through a wired network and/or a wireless network (such as Bluetooth), the data transmitter 160 transmits the bound XML data to the image forming device 200 through the wired and/or wireless network. However, it is understood that the wireless networks can be other types of networks using protocols other than Bluetooth.

The image forming device 200 receives the bound XML data from the host 100, classifies the bound XML data into the XML print data and the XML job setting data, and performs a job using the XML print data based on the job setting information of the bound XML job setting data. In the shown example, the image forming device 200 includes a data receiver 210, a data classifier 220, a setting job operator 230, a rendering operator 240, and a printer 250. However, it is understood that the image forming device 200 can be otherwise constructed, and can include other functionalities, such as scanning, copying, and/or faxing.

The data receiver 210 receives the bound XML data, and outputs the bound XML data to the data classifier 220. The data classifier 220 interprets the received XML data, classifies the data into the XML print data and the XML job setting data, and outputs the results of the classification to the setting job operator 230 and the rendering operator 240. The bound XML data includes the XML print data and the XML job setting data. The data classifier 220 includes an interpreter to interpret the received XML data. The data classifier 220 classifies the bound XML, data into the XML print data and the XML job setting data based on the result of the interpretation.

The setting job operator 230 performs a job corresponding to the classified XML job setting data. The XML job setting data includes information concerning whether to print the XML print data, whether to save the XML print data to the image forming device, and whether user authentication is required, and/or the like. When the XML job setting data includes a command to print the XML print data, the setting job operator 230 commands the rendering operator 240 to print the print data. When the XML job setting data includes a command to save the XML print data, the setting job operator 230 controls the saving of XML print data in a predetermined memory (not shown) of the image forming device 200. However, it is understood that the XML print data may be saved in a memory of an external device, such as a network server, through a wired or wireless connection. When the XML job setting data includes a command to perform user authentication, the setting job operator 230 controls the performing of a process of user authentication to print by the image forming device 200. To achieve this, the setting job operator 230 displays a dialogic window which may receive identification for the user authentication.

The rendering operator 240 performs rendering of the XML print data, and outputs the results of the rendering to the printer 250. The XML print data includes page information of the print data based on the PDL setting information. Accordingly, when the setting job operator 230 commands the rendering operator 240 to print the print data, the rendering operator 240 performs rendering of the print data based on the distribution of text or graphics of the print data, paper size, margin size, and/or the like.

The printer 250 prints the rendered print data on paper or other print media. While shown as within the apparatus 200, it is understood that the printer 250 could be connected to the apparatus 200, but not within the apparatus 200.

The method and system of forming an image using XML data according to aspects of the present invention may transmit and print data from a computer or mobile communication terminal not including a printer driver, such as a PDA, and enable users to control printing settings as desired.

In particular, according to aspects of the present invention, a printing job and a print job setting can be performed simultaneously using only one standardized XML protocol without defining a novel protocol. In addition, by using only one standardized protocol, a printing job and a print job setting can be readily performed on various platforms (Windows, Linux, Mac, a smart phone, PDA).

Although a few embodiments of the present invention have been shown and described, it would be appreciated by those skilled in the art that changes may be made in this embodiment without departing from the principles of the invention, the scope of which is defined in the claims.

## Claims

1. A method of forming an image using XML data, the method comprising:
generating XML print data, corresponding to print data, and generating XML job setting data, corresponding to job setting information of the print data;
binding the generated XML print data and the generated XML job setting data; and
transmitting the bound XML data for performing a job using the transmitted bound XML data.

2. The method as claimed in claim 1, wherein the generating step comprises:
receiving job information of the print data;
classifying the job information into page description language (PDL) setting information and job setting information; and
generating the XML print data, corresponding to the print data, using the PDL setting information, and generating the XML job setting data using the job setting information.

3. The method as claimed in claim 2, wherein the job information is received through a user interface.

4. The method as claimed in claim 1, 2 or 3, wherein the job setting information comprises at least one of
a first component indicating whether to print the XML print data,
a second component indicating whether to save the XML print data, and
a third component indicating whether user authentication is required to print and/or save.

5. The method as claimed in claim 4, wherein the second component, indicating whether to save the XML print data, comprises information indicating a save format.

6. The method as claimed in claim 1, wherein the bound XML data is transmitted through a wired and/or a wireless network.

7. The method as claimed in claim 1, wherein the generating of the XML print data and the XML job setting data, the binding of the XML print data and the XML job setting data, and the transmitting of the bound XML data are performed in a mobile device.

8. The method as claimed in claim 1, further comprising performing of the job using the transmitted bound XML data, said performing step comprises:
classifying the bound XML data into the XML print data and the XML job setting data; and
performing the job on the XML print data based on the job setting information of the XML job setting data.

9. The method as claimed in claim 8, wherein the performing of the job using the transmitted bound XML data further comprises:
rendering of the XML print data before performing the job on the XML print data.

10. The method as claimed in claim 1, wherein the the job is performable in an image forming device.

11. A computer readable recording medium encoded with process instructions for performing the method of any of claims 1 to 10, implemented by one or more computers.

12. A system of forming an image using XML data, the system comprising:
a host device being arranged
to generate XML print data, corresponding to print data, being arranged
to generate XML job setting data, corresponding to job setting information of the print data,
to bind the generated XML print data and the generated XML job setting data, and
to output the bound XML data; and
an image forming device arranged to receive the bound XML data from the host device, and to perform a job using the bound XML data.

13. The system as claimed in claim 12, wherein the host device is arranged to receive job information of the print data and the host device comprises:
classifying means arranged to classify the job information into page description language (PDL) setting information and the job setting information;
generator menas arranged to generate the XML print data, corresponding to the print data, using the PDL setting information;
setting means arranged to generate the XML job setting data using the job setting information;
binding means arranged to bind the generated XML print data and the generated XML job setting data; and
a data transmitter arranged to transmit the bound XML data to the image forming device.

14. The system as claimed in claim 13, wherein the host device further comprises a user interface arranged to receive the job information of the print data.

15. The system as claimed in claim 12, wherein the job setting information comprises at least one of a first component indicating whether to print the XML print data, a second component indicating whether to save the XML print data, and a third component indicating whether user authentication is required to print and/or save.

16. The system as claimed in claim 15, wherein the second component, indicating whether to save the XML print data, comprises information indicating a save format.

17. The system as claimed in claim 12, wherein the host device is arranged to transmit the bound XML data through a wired and/or a wireless network to the image forming device.

18. The system as claimed in claim 12, wherein the host device is a mobile device.

19. The system as claimed in claim 12, wherein the image forming device is arranged to classify the bound XML data into the XML print data and the XML job setting data, and perform the job on the XML print data based on the job setting information of the classified XML job set data.

20. The system as claimed in claim 19, wherein the image forming device comprises:
a data receiver arranged to receive the bound XML data:
a data classifier arranged to interpret and classify the received XML data into the XML print data and the XML job setting data;
a setting job operator arranged to perform the job corresponding to the XML job setting data; and
a rendering operator arranged to perform rendering of the classified XML print data.

21. The system as claimed in claim 20, wherein the image forming device further comprises a printer arranged to print the rendered print data.

22. An image forming device for receiving XML print data bound to XML job setting data from a host device, wherein the image forming device comprises:
a data classifier that arranged to classify the bound XML print data and XML job setting data into the XML print data and the XML job setting data, and to perform a job on the XML print data based on job setting information of the classified XML job set data; and
an image forming unit arranged to impart an image on a recording medium according to the job to be performed.

23. The image forming device as claimed in claim 22, wherein the image forming device comprises:
a data receiver arranged to receive the bound XML print data and XML job setting data:
a data classifier arranged to classify the bound XML print data and XML job setting data into the XML print data and the XML job setting data;
a setting job operator arranged to perform the job corresponding to the XML job setting data; and
a rendering operator arranged to perform rendering of the classified XML print data.
